# EUROPEAN PATENT SPECIFICATION

(11) **EP 3 511 195 B1**
(45) Date of publication and mention of the grant of the patent: **24.03.2021**
(21) Application number: 18151952.1
(22) Date of filing: 16.01.2018
(51) Int. Cl.: B60L 53/126, B60L 53/30, B60L 53/35, B60L 53/38, H02J 7/00, H02J 50/10, H02J 50/90, G05D 1/02, G01B 7/00, B60L 53/34, B60L 53/36, B60L 53/12

(54) **A DRIVING ASSIST SYSTEM AND A METHOD FOR GUIDING A VEHICLE OR A DRIVER OF THE VEHICLE TO A CHARGING STATION**
FAHRASSISTENZSYSTEM UND VERFAHREN ZUR FÜHRUNG EINES FAHRZEUGS ODER EINES FAHRERS DES FAHRZEUGS ZU EINER LADESTATION
SYSTÈME D'ASSISTANCE À LA CONDUITE ET PROCÉDÉ POUR GUIDER UN VÉHICULE OU UN CONDUCTEUR DU VÉHICULE VERS UNE STATION DE CHARGE

(43) Date of publication of application: 17.07.2019
(73) Proprietor: Bayerische Motoren Werke Aktiengesellschaft, 80809 München (DE)
(72) Inventor: Lund, Isaac, Salinas, CA 93907 (US); Viala, Pascal, Mountain View, 94043 (US)

(56) References cited:
- EP-A1- 2 697 910
- DE-A1-102009 033 239
- DE-A1-102012 211 151
- DE-A1-102014 217 056
- DE-A1-102015 201 416
- DE-A1-102016 121 883
- GB-A- 2 500 691
- US-A1- 2012 203 410
- US-A1- 2014 015 328
- US-A1- 2015 073 642
- US-A1- 2015 352 963
- US-A1- 2017 120 906

## Description

The invention concerns a driving assist system and a method for guiding a vehicle or a driver of the vehicle to a charging station.

The current state of the art for wireless charging parking assistant is to use a GPS (global positioning system) geolocation for long range assistant and to use bluetooth, WLAN (wireless local area network), ZigBee or other suitable wireless geolocation assistants for short range assistant. For efficient wireless transfer the receiver coil on the car has to be overlaid on the transmission coil on the ground or imbedded in the concrete with an offset allowed of up to 10 cm in the X and Y directions. There is no standard solution for the short range assistant with companies using bluetooth, WLAN or ZigBee and interfacing with the driver through an application on a mobile phone, a wall monitor or the vehicle's head unit.

The conventional driving assist systems assume that the optimum energy transfer coupling occurs when the centers of the ground and vehicle pads are aligned. This might not be the correct assumption at the outset, during the ground pads lifetime, and finally over all environmental conditions.

As conventional driving assist systems assume that the optimum energy transfer location is always in the center of the ground pad, geolocation is provided to center the receiver coil over that spot, although in reality the optimum point could be away from the center point in the ground pad, and could also change due to aging in the coils and environmental conditions such as rain, snow, freeze, etc. Conventional wireless charging systems for vehicles are described in documents US 2016 / 0 137 073 A1 and US 2017 / 0 036 553 A1.

US 2015/073642 A1 is directed to systems, methods, and apparatus for guiding and aligning an electric vehicle with a charging station. In one aspect, a method of guiding an electric vehicle is provided, including determining a location of a charging spot associated to a charging base in relation to a charging coupler of the electric vehicle. The method further includes displaying an indicator of the location of the charging spot in a three dimensional perspective view, the indicator displayed for guiding a user of the electric vehicle to position a charging coupler of the electric vehicle over the charging base within a tolerance area. The method further includes transitioning to displaying the indicator of the location of the charging spot in a two dimensional top-down view based on determining that an angle between a reference point and a point on ground related to the location of the charging spot satisfies a threshold.

GB 2 500 691 A1 is directed to a system and a method of automatically aligning a vehicle with an inductive charging station in which one or more sensors or cameras are coupled to a controller which thereby recognizes a charging station and calculates a route to align the vehicle with the charging station so as to optimize the coupling efficiency between the vehicle and the charging station. The controller directs the vehicle to autonomously position the vehicle in an optimum position for charging a battery.

US 2017/120906 A1 is directed to methods, computer systems, and servers for processing collision avoidance feedback to vehicles using vehicle-to-vehicle wireless communication.

It is an underlying object of the invention to provide a driving assist system that allows guiding a vehicle or a driver of the vehicle to a charging station such that an optimum energy transfer from the transmission coil to the receiver coil can be achieved. It is further an object of the invention to provide a vehicle that comprises the driving assist system and a method for guiding a vehicle or a driver of the vehicle to a charging station.

The object underlying the invention is satisfied by the features of the independent claims. Advantageous further developments and aspects of the invention are set forth in the dependent claims.

In a first aspect of the application a driving assist system for guiding a vehicle or a driver of the vehicle to a charging station is provided. The charging station is configured to generate an energy field, for example an electromagnetic field, for wirelessly transferring electrical energy to the vehicle. The driving assist system includes a sensor unit, a location determination unit, a control unit and a guidance unit.

The sensor unit is configured to record and process data on a wireless energy transfer event where energy is transferred from the charging station to the vehicle. For example, the sensor unit may measure a voltage and/or a current that are induced in the receiver coil by the energy field. The sensor unit may, for example, process the data on the measured voltage and/or current to obtain data on wireless energy transfer characteristics, for example, the coupling between the transmission coil of the charging station and the receiver coil while electrical energy is wirelessly transmitted from the transmission coil to the receiver coil.

The location determination unit is configured to determine or estimate the location of the vehicle when energy is wirelessly transferred from the charging station to the vehicle. The location determination unit may, for example, be a geolocation unit such as a GPS unit.

The control unit is configured to collect data on multiple wireless energy transfer events that have been recorded and processed by the sensor unit. In addition, the control unit is configured to collect data on the locations of the vehicle during the multiple wireless energy transfer events from the location determination unit. The data on the multiple wireless energy transfer events and the data on the locations of the vehicle during the multiple wireless energy transfer events allow the control unit to determine a location of the vehicle where optimum energy transfer coupling between the transmission and receiver coil occurs and thus optimum wireless energy transfer from the charging station to the vehicle can be achieved.

Further, the control unit may include a memory unit which is configured to store the collected data and the determined location of the vehicle for optimum energy transfer.

The guidance unit is configured to receive the location of the vehicle for optimum energy transfer from the control unit. When the driver of the vehicle intends to drive to the charging station again, the guidance unit can guide the vehicle or the driver to the location for optimum energy transfer.

The receiver coil is configured to convert the energy field generated by the charging station into an electrical signal, in particular an analog electrical signal. The analog electrical signal can be used for charging an energy storage unit, for example a battery, in the vehicle.

The driving assist system according to the first aspect of the application overcomes the disadvantages mentioned above as the driving assist system allows guiding the vehicle or the driver to the charging station such that the vehicle can be parked over a spot where an optimum energy transfer from the transmission coil to the receiver coil can be achieved. The driving assist system allows to correctly guide the vehicle or the driver to the optimal point for the actual highest energy transfer efficiency, instead of just to the supposed optimal location, i.e. the center. Further, the time for the vehicle or the driver to locate the optimum wireless energy transfer location is lessened by the driving assist system according to the first aspect of the application.

The data recorded and processed by the sensor unit may comprise data on the voltage and the current measured on the receiver coil during a wireless energy transfer event.

Further, the data recorded and processed by the sensor unit may comprise data on the impedance of an LC circuit, which is installed in the vehicle and includes the receiver coil, during the wireless energy transfer event.

Depending on the distance between the transmission coil of the charging station and the receiver coil, only a fraction of the magnetic or electromagnetic flux generated by the transmission coil penetrates the receiver coil and contributes to the energy transmission. The more flux reaches the receiver coil, the better the transmission coil and the receiver coil are coupled. The grade of coupling can be expressed by the coupling factor. The coupling factor is a dimensionless value between 0 and 1. 1 expresses perfect coupling between the transmission coil and the receiver coil, i.e., all flux generated penetrates the receiver coil. The coupling factor is 0 in a situation where the transmission coil and the receiver coil are independent of each other. In one embodiment, the data recorded and processed by the sensor unit comprise data on the coupling between the transmission coil and the receiver coil and, in particular, the coupling factor during a wireless energy transfer event.

Further, the data recorded and processed by the sensor unit may comprise data on the energy transferred from the charging station to the vehicle during a wireless energy transfer event.

Environmental conditions can influence the optimum energy transfer location. Therefore, the sensor unit may be configured to record and process data on at least one environmental condition when energy is transferred from the charging station to the vehicle. For example, the sensor unit may record the temperature during a wireless energy transfer event. The control unit may determine the location of the vehicle for optimum energy transfer depending on the at least one environmental condition. For example, the control unit may determine the optimum energy transfer location for a given temperature or a given temperature range.

In the embodiment, the control unit collects data on multiple wireless energy transfer events that took place at different times. From these data the control unit can detect a shift of the optimum energy transfer location over time, which may be due to aging of the transmission coil. If a shift of the optimum energy transfer location over time is detected, the optimum energy transfer location can be predicted for a given point in time.

In one embodiment, the driving assist system includes a transmission unit which is configured to wirelessly transmit the location for optimum energy transfer to a central station. The central station can provide other vehicles with this information which lessens the time for these vehicles to locate the optimum wireless energy transfer location. Alternatively, the transmission unit may transmit the location for optimum energy transfer directly to other vehicles.
The driving assist system may also comprise a receiver unit for wirelessly receiving a location for optimum energy transfer with respect to a further charging station from a central station and/or a further vehicle. This information helps the vehicle to quickly locate the optimum wireless energy transfer location over a charging station which has not been used by the vehicle before.

The guidance unit may be configured to automatically, in particular autonomously, maneuver the vehicle to the location for optimum energy transfer. In this case, the steering angle and, in particular, the velocity of the vehicle are automatically modified during the parking maneuver.

If the vehicle is manually driven to the optimum energy transfer location, the guidance unit may comprise an indication unit. The indication unit generates optical, audible, haptic or other suitable indications that indicate to the driver how to maneuver the vehicle to the location for optimum energy transfer. For example, the indication unit may indicate the steering angle to the driver in order to move the vehicle in the direction of the charging station.

The determined location for optimum energy transfer may be transmitted, in particular wirelessly, to a further vehicle. The further vehicle includes a guidance unit which is configured to receive the transmitted location for optimum energy transfer and to guide the further vehicle or a driver of the further vehicle to the location for optimum energy transfer. Thus, the determined location for optimum energy transfer can be used by other vehicles that do not have the ability to determine the location for optimum energy transfer as described herein.

In one embodiment, the data collected by the control unit are utilized to determine the best conditions for the installation of a ground pad, which includes a transmission coil. Further, the data can be utilized to determine the best practices for maintenance of the ground pad, the best brand of transmission coils and/or the best environmental conditions for an optimum energy transfer to a vehicle. According to a second aspect of the application, a vehicle comprises a driving assist system as described above.

According to a third aspect of the application, a method for guiding a vehicle or a driver of the vehicle to a charging station, which generates an energy field for wirelessly transferring energy to the vehicle, comprises the following steps: recording and processing data on a wireless energy transfer event from the charging station to the vehicle; determining the location of the vehicle during the wireless energy transfer event; collecting data on multiple wireless energy transfer events and the locations of the vehicle during the multiple wireless energy transfer events and determining a location of the vehicle for optimum energy transfer from the collected data; and guiding the vehicle or a driver of the vehicle to the location for optimum energy transfer.

The method may comprise the embodiments disclosed above in connection with the driving assist system according to the first aspect of the application.

It should be observed that the methods, devices and systems described in the present document can be applied both in isolation and in combination with other methods, devices and systems described in the present document. Moreover, any aspects of the methods, devices and systems described in the present document can be mutually combined in a variety of ways.

The invention will be described in more detail in the following in an exemplary manner with reference to an embodiment and to the drawings. There are shown in these:
- Fig. 1: a schematic representation of an exemplary embodiment of a driving assist system according to the first aspect of the application and a vehicle according to the second aspect of the application; and
- Fig. 2: a schematic representation of an exemplary embodiment of a method according to the third aspect of the application.

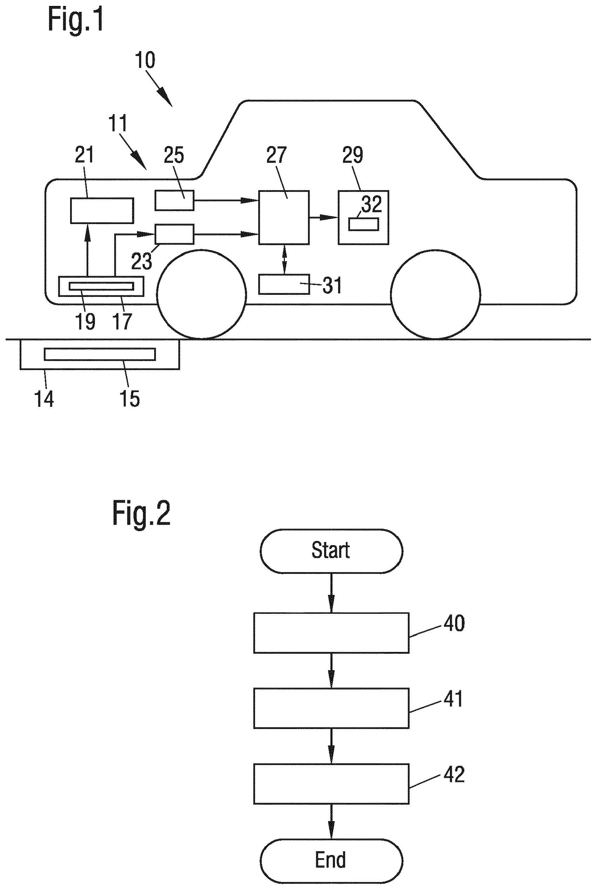

In Fig. 1 an exemplary embodiment of a vehicle 10, in particular a car, and an exemplary embodiment of a driving assist system 11 installed in the vehicle 10 according to the first and second aspects of the application are illustrated.

The driving assist system 11 allows positioning/parking the vehicle 10 over a charging station 14. The charging station 14 is, for example, embedded in the floor of a parking area and includes a transmission coil 15. The transmission coil 15 generates an energy field, in particular an electromagnetic field, for wirelessly transmitting energy to the vehicle 10.

The driving assist system 11 includes an LC circuit 17 with a receiver coil 19, an energy storage unit 21, a sensor unit 23, a location determination unit 25, a control unit 27, a guidance unit 29 and a transmission and receiver unit 31.

In the charging station 14, a radio-frequency generator generates an alternating current in the transmission coil 15, as a result of which the energy field is induced. Given sufficient electromagnetic coupling between the transmission coil 15 and the receiver coil 19, the energy field induces a corresponding voltage and therefore also a current in the receiver coil 19. The induced current in the receiver coil 19 is rectified by a rectifier and charges the energy storage unit 21, which is, for example, a battery. It is therefore possible to wirelessly transmit energy by means of the charging field from the charging station 14 to the energy storage unit 21 in the vehicle 10. For an effective energy transfer it is necessary for the receiver coil 19 to be positioned relatively precisely over the transmission coil 15.

Fig. 2 illustrates an exemplary embodiment of a method for guiding the vehicle 10 or a driver of the vehicle 10 to the charging station 14 according to the third aspect of the application. The method can be performed by the driving assist system 11 shown in Fig. 1.

The method starts in step 40 when the vehicle 10 has been parked over the charging station 14 for charging the energy storage unit 21. The transmission coil 15 generates an energy field as described above and the receiver coil 19 converts the energy field into an electrical signal, in particular an analog electrical signal, that is utilized to charge the energy storage unit 21. During this wireless energy transfer event the sensor unit 23 records and processes data on the wireless energy transfer from the charging station 14 to the energy storage unit 21 in order to obtain data on wireless energy transfer characteristics. Further, the sensor unit 23 feeds the recorded and processed data to the control unit 27.

The data recorded and processed by the sensor unit 23 may comprise data on the voltage and current measured on the receiver coil 19 during the wireless energy transfer event. From the recorded data, the sensor unit 23 or the control unit 27 may determine the impedance of the LC circuit 17 during the energy transfer. Further, the data recorded and processed by the sensor unit 23 may comprise data on the coupling between the transmission coil 15 and the receiver coil 19 and/or data on the energy transferred from the charging station 14 to the energy storage unit 21 during the wireless energy transfer event.

In addition, the location determination unit 25 determines the location of the vehicle 10 during the wireless energy transfer event in step 40. For this purpose, the location determination unit 25 may include a geolocation unit which can be, for example, a GPS geolocation unit. The location determination unit 25 feeds the data on the location of the vehicle 10 during the wireless energy transfer event to the control unit 27.

The control unit 27 collects the data received from the sensor unit 23 and the location determination unit 25. The control unit 27 can store these data in a memory unit.

In step 41, the vehicle 10 has been parked again over the same charging station 14 for charging the energy storage unit 21.

During this new wireless energy transfer event, the sensor unit 23 again records and processes data on the wireless energy transfer from the charging station 14 to the energy storage unit 21. The data recorded and processed by the sensor unit 23 in step 41 may be of the same type as the data recorded and processed by the sensor unit 23 in step 40. The sensor unit 23 feeds the recorded and processed data to the control unit 27.

The location determination unit 25 also determines the location that the vehicle 10 has during the wireless energy transfer event in step 41 and feeds the data on the location of the vehicle 10 to the control unit 27.

The control unit 27 collects the data received from the sensor unit 23 and the location determination unit 25 in step 41 and stores the data in the memory unit.

It may be provided that the procedure of step 41 is repeated once or several times when the vehicle 10 is parked again over the charging station 14 for charging the energy storage unit 21.

When data on multiple wireless energy transfer events have been collected by the control unit 27, the control unit 27 utilizes the collected data to determine the location of the vehicle 20 for optimum energy transfer. For example, the control unit 27 may select the location of the vehicle from the multiple wireless energy transfer events where the optimum energy transfer coupling between the transmission coil 15 and the receiver coil 19 occurred or, according to the invention, where the highest amount of energy was transferred from the transmission coil 15 to the receiver coil 19 within a given period of time. Further, the control unit 27 may utilize mathematical methods, for example extrapolation and/or interpolation methods, to determine the location of the vehicle 10 for optimum wireless energy transfer from the collected data.

In addition, the sensor unit 23 may record and process data on environmental conditions during the multiple wireless energy transfer events and the control unit 27 may collect these data. For example, the sensor unit 23 includes a temperature sensor to measure the ambient temperature. The control unit 27 can then determine the location of the vehicle 10 for optimum energy transfer depending on the environmental conditions. For example, the control 27 can determine the optimum energy transfer location depending on the ambient temperature. The optimum energy transfer location for temperatures around 0 °C may differ from the optimum energy transfer location for temperatures around 20 °C.

Further, the control unit 27 utilizes data on multiple wireless energy transfer events that took place at different times in order to determine a shift of the location for optimum energy transfer over time. The control unit 27 utilizes this shift to predict the optimum energy transfer location for a given point in time, for example, when the vehicle 10 approaches the charging station 14 the next time.

In step 42, the vehicle 10 approaches the charging station 14 again for charging the energy storage unit 21. The guidance unit 29 receives the location of the vehicle 10 for optimum energy transfer from the control unit 27 and guides the vehicle 10 or a driver of the vehicle 10 such that the vehicle 10 is moved to the optimum energy transfer location determined by the control unit 27 from the data of the multiple energy transfer events. This allows to guide the vehicle 10 or the driver to the charging station 14 such that an optimum energy transfer from the transmission coil 15 to the receiver coil 19 can be achieved.

In order to be able to guide the vehicle 10 or the driver to the optimum energy transfer location or spot over the charging station 14, the guidance unit 29 may receive data on the actual location of the vehicle 10 from the location determination unit 25.

The guidance unit 29 can be configured to automatically maneuver the vehicle 10 to the optimum energy transfer location over the charging station 14, i.e., the vehicle 10 is automatically steered and, in particular, the brake and the driving speed of the vehicle 10 are controlled by the guidance unit 29.

Alternatively, the guidance unit 29 comprises an indication unit 32 which may be a screen, a loudspeaker or any other suitable device and which generates indications to indicate to the driver how to maneuver the vehicle 10 to the optimum energy transfer location.

The transmission and receiver unit 31 can wirelessly transmit the location for optimum energy transfer determined by the control unit 27 to a central station. The central station can provide other vehicles with this information which lessens the time for these vehicles to locate the optimum wireless energy location over the charging station 14. It may also be provided that the transmission and receiver unit 31 directly transmits the data on the optimum energy transfer location for the charging station 14 directly to other vehicles.

Further, the transmission and receiver unit 31 can wirelessly receive data on a location for optimum energy transfer with respect to another charging station from the central station and/or a further vehicle. In case the vehicle 10 approaches this charging station, these data can be used by the guidance unit 29 to guide the vehicle 10 or the driver to the location for optimum energy transfer over this charging station.

The data collected by the control unit may also be utilized to determine the best conditions for the installation of a ground pad, which includes a transmission coil. Further, the data can be utilized to determine the best practices for maintenance of the ground pad, the best brand of transmission coils and/or the best environmental conditions for an optimum energy transfer to a vehicle.

## Claims

1. A driving assist (11) system for guiding a vehicle (10) or a driver of the vehicle (10) to a charging station (14) which is configured to generate an energy field for wirelessly transferring energy to the vehicle (10), comprising:
- a sensor unit (23) which is configured to record and process data on a wireless power transfer event where power is transferred from the charging station (14) to the vehicle (10), wherein the data recorded and processed by the sensor unit (23) comprises data on the power transferred to the vehicle (10) during the wireless power transfer event;
- a location determination unit (25) which is configured to determine the location of the vehicle (10) during the wireless power transfer event;
- a control unit (27) which is configured
∘ to collect data on multiple wireless power transfer events that took place at different times from the sensor unit (23) and the locations of the vehicle (10) during the multiple wireless power transfer events from the location determination unit (25),
∘ to determine a shift of a location of the vehicle (10) for optimum energy transfer over time based on the collected data, wherein the location of the vehicle (10) for optimum power transfer is determined by selecting from the collected data the location of the vehicle (10) where a highest amount of energy was transferred from a transmission coil (15) of the charging station (14) to a receiver coil (19) of the vehicle (10) within a given period of time, and
∘ to predict the location of the vehicle (10) for optimum power transfer for a given point in time using the shift; and
- a guidance unit (29) which is configured to receive the location of the vehicle (10) for optimum power transfer from the control unit (27) and to guide the vehicle (10) or a driver of the vehicle (10) to the location for optimum energy transfer.

2. The driving assist system (11) as claimed in claim 1, wherein the data recorded and processed by the sensor unit (23) comprise data on the impedance of an LC circuit (17) comprising a receiver coil (19) which is configured to convert the energy field into an analog electrical signal during a wireless power transfer event and/or data on the voltage and current measured on the receiver coil (19) during a wireless energy transfer event and/or data on a coupling between a transmission coil (15) of the charging station (14) and the receiver coil (19) during a wireless power transfer event.

3. The driving assist system (11) as claimed in claim 1 or 2, wherein the sensor unit (23) is further configured to record and process data on at least one environmental condition during a wireless power transfer event and the control unit (27) is further configured to determine the location of the vehicle (10) for optimum power transfer depending on the at least one environmental condition.

4. The driving assist system (11) as claimed in one of the preceding claims, further comprising a transmission unit (31) which is configured to wirelessly transmit the location for optimum power transfer to a central station and/or a further vehicle.

5. The driving assist system (11) as claimed in one of the preceding claims, further comprising a receiver unit (31) which is configured to wirelessly receive a location for optimum power transfer with respect to a further charging station from a central station and/or a further vehicle.

6. The driving assist system (11) as claimed in one of the preceding claims, wherein the guidance unit (29) is further configured to automatically maneuver the vehicle (10) to the location for optimum power transfer.

7. The driving assist system (11) as claimed in one of the claims 1 to 5, wherein the guidance unit (29) comprises an indication unit (32) which is configured to generate indications to indicate to the driver how to maneuver the vehicle (10) to the location for optimum power transfer.

8. Vehicle (10) comprising a driving assist system (11) as claimed in one of the preceding claims.

9. A method for guiding a vehicle (10) or a driver of the vehicle (10) to a charging station (14) which generates an energy field for wirelessly transferring power to the vehicle (10), comprising:
- recording and processing data on a wireless power transfer event where power is transferred from the charging station (14) to the vehicle (10), wherein the data recorded and processed by the sensor unit (23) comprises data on the power transferred to the vehicle (10) during the wireless power transfer event;
- determining the location of the vehicle (10) during the wireless power transfer event;
- collecting data on multiple wireless power transfer events that took place at different times and the locations of the vehicle (10) during the multiple wireless power transfer events,
- determining a shift of a location of the vehicle (10) for optimum power transfer over time based on the collected data, wherein the location of the vehicle (10) for optimum power transfer is determined by selecting from the collected data the location of the vehicle (10) where a highest amount of energy was transferred from a transmission coil (15) of the charging station (14) to a receiver coil (19) of the vehicle (10) within a given period of time, and
- predicting the location of the vehicle (10) for optimum power transfer for a given point in time using the shift; and
- guiding the vehicle (10) or a driver of the vehicle (10) to the location for optimum power transfer.

10. The method as claimed in claim 9, wherein the recorded and processed data comprise data on the impedance of an LC circuit (17) comprising a receiver coil (19) which converts the energy field into an analog electrical signal during a wireless power transfer event and/or data on the voltage and current measured on the receiver coil (19) during a wireless power transfer event and/or data on a coupling between a transmission coil (15) of the charging station (14) and the receiver coil (19) during a wireless power transfer event.

11. The method as claimed in claim 9 or 10, wherein data on at least one environmental condition are recorded and processed during a wireless power transfer event and the location of the vehicle (10) for optimum energy power transfer is determined depending on the at least one environmental condition.

12. The method as claimed in one of the claims 9 to 11, wherein the location for optimum power transfer is wirelessly transmitted to a central station and/or a further vehicle, and/or wherein a location for optimum power transfer with respect to a further charging station is wirelessly received from a central station and/or a further vehicle.

13. The method as claimed in one of the claims 9 to 12, wherein the location for optimum energy transfer is transmitted to a further vehicle and the further vehicle or a driver of the further vehicle is guided to the location for optimum energy transfer.

## Patentansprüche

1. Fahrassistenzsystem (11) zum Führen eines Fahrzeugs (10) oder eines Fahrers des Fahrzeugs (10) zu einer Ladestation (14), die dazu ausgelegt ist, ein Energiefeld zum drahtlosen Übertragen von Energie an das Fahrzeug (10) zu erzeugen, umfassend:
- eine Sensoreinheit (23), die dazu ausgelegt ist, Daten über ein drahtloses Energieübertragungsereignis aufzuzeichnen und zu verarbeiten, wobei Energie aus der Ladestation (14) an das Fahrzeug (10) übertragen wird, wobei die durch die Sensoreinheit (23) aufgezeichneten und verarbeiteten Daten Daten über die während des drahtlosen Energieübertragungsereignisses an das Fahrzeug (10) übertragene Energie umfassen;
- eine Standortbestimmungseinheit (25), die dazu ausgelegt ist, den Standort des Fahrzeugs (10) während des drahtlosen Energieübertragungsereignisses zu bestimmen;
- eine Steuereinheit (27), die dazu ausgelegt ist,
o Daten über mehrere drahtlose Energieübertragungsereignisse, die zu unterschiedlichen Zeiten stattgefunden haben, aus der Sensoreinheit (23) und den Standorten des Fahrzeugs (10) während der mehreren drahtlosen Energieübertragungsereignisse aus der Standortbestimmungseinheit (25) zu sammeln,
o eine Verlagerung eines Standorts des Fahrzeugs (10) für optimale Energieübertragung über die Zeit basierend auf den gesammelten Daten zu bestimmen, wobei der Standort des Fahrzeugs (10) für optimale Energieübertragung durch Auswählen des Standorts des Fahrzeugs (10) aus den gesammelten Daten bestimmt wird, wobei innerhalb einer bestimmten Zeitspanne eine höchste Energiemenge aus einer Sendespule (15) der Ladestation (14) an eine Empfängerspule (19) des Fahrzeugs (10) übertragen wurde, und
o den Standort des Fahrzeugs (10) für optimale Energieübertragung für einen gegebenen Zeitpunkt unter Verwendung der Verlagerung vorherzusagen; und
- eine Führungseinheit (29), die dazu ausgelegt ist, den Standort des Fahrzeugs (10) für optimale Energieübertragung aus der Steuereinheit (27) zu empfangen und das Fahrzeug (10) oder einen Fahrer des Fahrzeugs (10) zu dem Standort für optimale Energieübertragung zu führen.

2. Fahrassistenzsystem (11) gemäß Anspruch 1, wobei die durch die Sensoreinheit (23) erfassten und verarbeiteten Daten Daten über die Impedanz einer LC-Schaltung (17), die eine Empfängerspule (19) umfasst, die dazu ausgelegt ist, das Energiefeld während eines drahtlosen Energieübertragungsereignisses in ein analoges elektrisches Signal umzuwandeln, und/oder Daten über die an der Empfängerspule (19) gemessene Spannung und den gemessenen Strom während eines drahtlosen Energieübertragungsereignisses und/oder Daten über eine Kopplung zwischen einer Sendespule (15) der Ladestation (14) und der Empfängerspule (19) während eines drahtlosen Energieübertragungsereignisses umfassen.

3. Fahrassistenzsystem (11) gemäß Anspruch 1 oder 2, wobei die Sensoreinheit (23) ferner dazu ausgelegt ist, Daten über mindestens eine Umgebungsbedingung während eines drahtlosen Energieübertragungsereignisses zu aufzuzeichnen und zu verarbeiten, und die Steuereinheit (27) ferner dazu ausgelegt ist, den Standort des Fahrzeugs (10) für optimale Energieübertragung in Abhängigkeit von der mindestens einen Umgebungsbedingung zu bestimmen.

4. Fahrassistenzsystem (11) gemäß einem der vorhergehenden Ansprüche, ferner umfassend eine Sendeeinheit (31), die dazu ausgelegt ist, den Standort für optimale Energieübertragung drahtlos an eine Zentralstation und/oder ein weiteres Fahrzeug zu senden.

5. Fahrassistenzsystem (11) gemäß einem der vorhergehenden Ansprüche, ferner umfassend eine Empfängereinheit (31), die dazu ausgelegt ist, einen Standort für optimale Energieübertragung in Bezug auf eine weitere Ladestation aus einer Zentralstation und/oder einem weiteren Fahrzeug drahtlos zu empfangen.

6. Fahrassistenzsystem (11) gemäß einem der vorhergehenden Ansprüche, wobei die Führungseinheit (29) ferner dazu ausgelegt ist, das Fahrzeug (10) automatisch an den Standort für optimale Energieübertragung zu manövrieren.

7. Fahrassistenzsystem (11) gemäß einem der Ansprüche 1 bis 5, wobei die Führungseinheit (29) eine Anzeigeeinheit (32) umfasst, die dazu ausgelegt ist, Anzeigen zu erzeugen, um dem Fahrer anzuzeigen, wie das Fahrzeug (10) an den Standort für optimale Energieübertragung zu manövrieren ist.

8. Fahrzeug (10), umfassend ein Fahrassistenzsystem (11) gemäß einem der vorhergehenden Ansprüche.

9. Verfahren zum Führen eines Fahrzeugs (10) oder eines Fahrers des Fahrzeugs (10) zu einer Ladestation (14), die ein Energiefeld zum drahtlosen Übertragen von Energie an das Fahrzeug (10) erzeugt, umfassend:
- Aufzeichnen und Verarbeiten von Daten über ein drahtloses Energieübertragungsereignis, wobei Energie aus der Ladestation (14) an das Fahrzeug (10) übertragen wird, wobei die durch die Sensoreinheit (23) aufgezeichneten und verarbeiteten Daten Daten über die während des drahtlosen Energieübertragungsereignisses an das Fahrzeug (10) übertragene Energie umfassen;
- Bestimmen des Standorts des Fahrzeugs (10) während des drahtlosen Energieübertragungsereignisses;
- Sammeln von Daten über mehrere drahtlose Energieübertragungsereignisse, die zu unterschiedlichen Zeiten stattgefunden haben, und der Standorte des Fahrzeugs (10) während der mehreren drahtlosen Energieübertragungsereignisse,
- Bestimmen einer Verlagerung eines Standorts des Fahrzeugs (10) für optimale Energieübertragung über die Zeit basierend auf den gesammelten Daten, wobei der Standort des Fahrzeugs (10) für optimale Energieübertragung durch Auswählen des Standorts des Fahrzeugs (10) aus den gesammelten Daten bestimmt wird, wobei innerhalb einer bestimmten Zeitspanne eine höchste Energiemenge aus einer Sendespule (15) der Ladestation (14) an eine Empfängerspule (19) des Fahrzeugs (10) übertragen wurde, und
- Vorhersagen des Standorts des Fahrzeugs (10) für optimale Energieübertragung für einen gegebenen Zeitpunkt unter Verwendung der Verlagerung; und
- Führen des Fahrzeugs (10) oder eines Fahrers des Fahrzeugs (10) zu dem Standort für optimale Energieübertragung.

10. Verfahren gemäß Anspruch 9, wobei die aufgezeichneten und verarbeiteten Daten Daten über die Impedanz einer LC-Schaltung (17), die eine Empfängerspule (19) umfasst, die das Energiefeld während eines drahtlosen Energieübertragungsereignisses in ein analoges elektrisches Signal umwandelt, und/oder Daten über die an der Empfängerspule (19) gemessene Spannung und den gemessenen Strom während eines drahtlosen Energieübertragungsereignisses und/oder Daten über eine Kopplung zwischen einer Sendespule (15) der Ladestation (14) und der Empfängerspule (19) während eines drahtlosen Energieübertragungsereignisses umfassen.

11. Verfahren gemäß Anspruch 9 oder 10, wobei während eines drahtlosen Energieübertragungsereignisses Daten über mindestens eine Umgebungsbedingung erfasst und verarbeitet werden und in Abhängigkeit von der mindestens einen Umgebungsbedingung der Standort des Fahrzeugs (10) für optimale Energieübertragung bestimmt wird.

12. Verfahren gemäß einem der Ansprüche 9 bis 11, wobei der Standort für optimale Energieübertragung drahtlos an eine Zentralstation und/oder ein weiteres Fahrzeug übertragen wird und/oder wobei ein Standort für optimale Energieübertragung in Bezug auf eine weitere Ladestation drahtlos aus einer Zentralstation und/oder einem weiteren Fahrzeug empfangen wird.

13. Verfahren gemäß einem der Ansprüche 9 bis 12, wobei der Standort für optimale Energieübertragung an ein weiteres Fahrzeug gesendet wird und das weitere Fahrzeug oder ein Fahrer des weiteren Fahrzeugs zu dem Standort für optimale Energieübertragung geführt wird.

## Revendications

1. Système d'assistance à la conduite (11) pour guider un véhicule (10) ou un conducteur du véhicule (10) vers une station de charge (14) qui est configurée pour générer un champ d'énergie pour transférer de l'énergie sans fil au véhicule (10), comprenant :
- une unité de capteur (23) qui est configurée pour enregistrer et traiter des données sur un événement de transfert d'énergie sans fil où l'énergie est transférée de la station de charge (14) au véhicule (10), les données enregistrées et traitées par l'unité de capteur (23) comprenant des données sur l'énergie transférée au véhicule (10) pendant l'événement de transfert d'énergie sans fil ;
une unité de détermination d'emplacement (25) qui est configurée pour déterminer l'emplacement du véhicule (10) pendant l'événement de transfert d'énergie sans fil ;
une unité de commande (27) qui est configurée pour
∘ collecter des données sur les multiples événements de transfert d'énergie sans fil qui ont eu lieu à différents moments à partir de l'unité de capteur (23) et les emplacements du véhicule (10) pendant les multiples événements de transfert d'énergie sans fil à partir de l'unité de détermination d'emplacement (25),
∘ déterminer une commutation d'un emplacement du véhicule (10) pour un transfert d'énergie optimal dans le temps sur la base des données collectées, l'emplacement du véhicule (10) pour un transfert d'énergie optimal étant déterminé en sélectionnant à partir des données collectées l'emplacement du véhicule (10) où une quantité d'énergie la plus élevée a été transférée d'une bobine de transmission (15) de la station de charge (14) à une bobine de réception (19) du véhicule (10) dans une période de temps donnée, et
∘ prédire l'emplacement du véhicule (10) pour un transfert d'énergie optimal à un moment donné en utilisant la commutation ; et
- une unité de guidage (29) qui est configurée pour recevoir l'emplacement du véhicule (10) pour un transfert d'énergie optimal à partir de l'unité de commande (27) et pour guider le véhicule (10) ou un conducteur du véhicule (10) vers l'emplacement pour un transfert d'énergie optimal.

2. Système d'assistance à la conduite (11) selon la revendication 1, les données enregistrées et traitées par l'unité de capteur (23) comprenant des données sur l'impédance d'un circuit LC (17) comprenant une bobine de réception (19) qui est configurée pour convertir le champ d'énergie en un signal électrique analogique pendant un événement de transfert d'énergie sans fil et/ou des données sur la tension et le courant mesurés sur la bobine de réception (19) pendant un événement de transfert d'énergie sans fil et/ou des données sur un couplage entre une bobine de transmission (15) de la station de charge (14) et la bobine de réception (19) pendant un événement de transfert d'énergie sans fil.

3. Système d'assistance à la conduite (11) selon la revendication 1 ou 2, l'unité de capteur (23) étant en outre configurée pour enregistrer et traiter des données sur au moins une condition environnementale pendant un événement de transfert d'énergie sans fil et l'unité de commande (27) étant en outre configurée pour déterminer l'emplacement du véhicule (10) pour un transfert d'énergie optimal en fonction de l'au moins une condition environnementale.

4. Système d'assistance à la conduite (11) selon l'une des revendications précédentes, comprenant en outre une unité de transmission (31) qui est configurée pour transmettre sans fil l'emplacement pour un transfert d'énergie optimal à une station centrale et/ou à un autre véhicule.

5. Système d'assistance à la conduite (11) selon l'une des revendications précédentes, comprenant en outre une unité de réception (31) qui est configurée pour recevoir sans fil un emplacement pour un transfert d'énergie optimal par rapport à une autre station de charge à partir d'une station centrale et/ou d'un autre véhicule.

6. Système d'assistance à la conduite (11) selon l'une des revendications précédentes, l'unité de guidage (29) étant en outre configurée pour manœuvrer automatiquement le véhicule (10) vers l'emplacement pour un transfert d'énergie optimal.

7. Système d'assistance à la conduite (11) selon l'une des revendications 1 à 5, l'unité de guidage (29) comprenant une unité d'indication (32) qui est configurée pour générer des indications afin d'indiquer au conducteur comment manœuvrer le véhicule (10) vers l'emplacement pour un transfert d'énergie optimal.

8. Véhicule (10) comprenant un système d'assistance à la conduite (11) selon l'une des revendications précédentes.

9. Procédé pour guider un véhicule (10) ou un conducteur du véhicule (10) vers une station de charge (14) qui génère un champ d'énergie pour transférer sans fil de l'énergie au véhicule (10), comprenant :
- l'enregistrement et le traitement de données sur un événement de transfert d'énergie sans fil où l'énergie est transférée de la station de charge (14) au véhicule (10), les données enregistrées et traitées par l'unité de capteur (23) comprenant des données sur l'énergie transférée au véhicule (10) pendant l'événement de transfert d'énergie sans fil ;
- la détermination de l'emplacement du véhicule (10) pendant l'événement de transfert d'énergie sans fil ;
- la collecte de données sur des multiples événements de transfert d'énergie sans fil qui ont eu lieu à différents moments et les emplacements du véhicule (10) pendant les multiples événements de transfert d'énergie sans fil,
- la détermination d'une commutation d'un emplacement du véhicule (10) pour un transfert d'énergie optimal dans le temps sur la base des données collectées, l'emplacement du véhicule (10) pour un transfert d'énergie optimal étant déterminé en sélectionnant à partir des données collectées l'emplacement du véhicule (10) où une quantité d'énergie la plus élevée a été transférée d'une bobine de transmission (15) de la station de charge (14) à une bobine de réception (19) du véhicule (10) dans une période de temps donnée, et
- la prévision de l'emplacement du véhicule (10) pour un transfert d'énergie optimal à un moment donné en utilisant la commutation ; et
- le guidage du véhicule (10) ou d'un conducteur du véhicule (10) vers l'emplacement où le transfert d'énergie est optimal.

10. Procédé selon la revendication 9, les données enregistrées et traitées comprenant des données sur l'impédance d'un circuit LC (17) comprenant une bobine de réception (19) qui convertit le champ d'énergie en un signal électrique analogique pendant un événement de transfert d'énergie sans fil et/ou des données sur la tension et le courant mesurés sur la bobine de réception (19) pendant un événement de transfert d'énergie sans fil et/ou des données sur un couplage entre une bobine de transmission (15) de la station de charge (14) et la bobine de réception (19) pendant un événement de transfert d'énergie sans fil.

11. Procédé selon la revendication 9 ou 10, des données sur au moins une condition environnementale étant enregistrées et traitées pendant un événement de transfert d'énergie sans fil et l'emplacement du véhicule (10) pour un transfert d'énergie optimal étant déterminé en fonction de l'au moins une condition environnementale.

12. Procédé selon l'une des revendications 9 à 11, l'emplacement pour le transfert d'énergie optimal étant transmis sans fil à une station centrale et/ou à un autre véhicule, et/ou un emplacement pour le transfert d'énergie optimal par rapport à une autre station de charge étant reçu sans fil à partir d'une station centrale et/ou d'un autre véhicule.

13. Procédé selon l'une des revendications 9 à 12, l'emplacement pour le transfert d'énergie optimal étant transmis à un autre véhicule et l'autre véhicule ou un conducteur de l'autre véhicule étant guidé vers l'emplacement pour le transfert d'énergie optimal.
